# EUROPÄISCHE PATENTANMELDUNG

(11) **EP 0 736 397 A1**
(43) Veröffentlichungstag der Anmeldung: **09.10.1996**
(21) Anmeldenummer: 96105271.9
(22) Anmeldetag: 02.04.1996
(51) Int. Cl.: B44C 1/22, B23K 26/18, F21P 5/04, G09F 19/18

(54) **Verfahren zur Herstellung von Bildträgern zur Durchleuchtungsprojektion**

(30) Priorität: 02.04.1995 DE 19511977
(71) Anmelder: Brigitte De Gooijer Gestaltungstechnik, 40215 Düsseldorf (DE)
(72) Erfinder: De Gooijer, Johannes, 40215 Düsseldorf (DE)
(74) Vertreter: Christophersen, Ruth, Dr.

(57) **Zusammenfassung**

Verfahren zur Herstellung von mit lichtdurchlässigen Mustern versehenen Bildträgern, das sich dadurch auszeichnet, daß das Muster auf dem Bildträger durch partielles Abtragen eines zuvor auf den Träger in Form einer Schicht aufgebrachten lichtundurchlässigen und/oder lichtdurchlässigen Materials und/oder durch Aufbringen eines lichtundurchlässigen und/oder lichtdurchlässigen Materials mittels eines Laserstrahls erzeugt wird.

## Beschreibung

Die vorliegende Erfindung betrifft ein Verfahren zur Herstellung von mit lichtdurchlässigen Mustern versehenen Bildträgern.

In der Werbung werden beschichtete Bildträger, auch Gobo genannt, eingesetzt, um mittels Lichtwerfersystemen Abbildungen und Darstellungen wie Schriften, Firmenzeichen, Symbole, Bildern usw. auf jeden beliebigen Untergrund zur Präsentation von Waren, zum Einsatz auf Messen oder in der Außenwerbung zu projizieren, Lasershows in Diskotheken u.ä. Ein Gobo ist üblicherweise eine planparallele runde Scheibe aus Glas oder Metall mit einem Durchmesser von etwa 2 Zentimetern bis 15 Zentimetern, je nach Ausgestaltung des verwendeten Lichtwerfersystems.

Die verwendeten Lichtwerfersysteme können in Räumen und auch außen bei Tageslicht oder Dunkelheit eingesetzt werden. Sie haben eine Reichweite bis zu ca. 60 m. Um die darzustellenden Abbildungen, Schriften usw. in einer ausreichenden Schärfe und Helligkeit projizieren zu können, sind sehr lichtstarke optische Systeme mit energiereichen Lichtquellen notwendig.

Die Bildträger, die im Lichtwerfer unmittelbar vor der Lichtquelle angeordnet sind, werden bei der Projektion Temperaturen bis zu 300°C ausgesetzt. An diese Bildträger werden daher hinsichtlich Licht- und Hitzebeständigkeit und bei Einsatz in der Außenwerbung hinsichtlich Feuchtigkeitsbeständigkeit sehr hohe Anforderungen gestellt. Für diese Zwecke werden üblicherweise Metallscheiben oder mit Metallen oder Metalloxiden, z.B. Chrom, bedampfte Glasscheiben eingesetzt.

Als Metallscheiben können Scheiben aus Stahl, wie V2A-Stahl, V4A-Stahl, Federbandstahl usw. eingesetzt werden. In diese Metallscheiben die Muster, wie z.B. Buchstaben bzw. Schriftzüge, eingeätzt oder eingefräst. Bei dieser Technik ist es jedoch nicht möglich, die Buchstaben der darzustellenden Schriftzüge ohne sogenannte Stege darzustellen. Soll beispielsweise ein 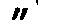 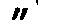 O" gefräst werden, so können die Konturen des 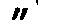 O" nur partiell ausgefräst werden, da sonst die Mitte des 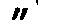 O" ebenfalls entfernt werden und nur ein Loch in der Metallplatte zurückbleiben würde. Beim Fräsen bleiben am Rand des Musters bzw. Schriftzugs Grate zurück, die bei der Darstellung des Musters bzw. Schriftzugs mit einem Lichtwerfersystem Schatten werfen und zu Randunschärfen führen.

Die üblicherweise verwendeten Lichtwerfersysteme sind sehr lichtintensiv, was dazu führt, daß beim Bestrahlen des Bildträgers der Bildträger stark erhitzt wird, während der Bildträger bei Außen angebrachten Lichtwerfersystemen gleichzeitig von der Außentemperatur gekühlt wird, was zu starken Temperaturunterschieden innerhalb des Bildträgers führt. Es wurde festgestellt, daß insbesondere dann, wenn die metallbedampften Glasscheiben in den Lichtwerfersystemen eingesetzt und mit starken Lichtquellen bestrahlt werden, die Metallbeschichtung bereits nach kurzer Zeit abplatzt und das Muster oder die Beschriftung insbesondere an den Rändern abplatzt, was zu Randunschärfen führt oder der Bildträger auch völlig unbrauchbar ist. Das Abplatzen der Metallbeschichtung kann darauf zurückgeführt werden, daß in den durch Ätzverfahren behandelte Glasträgern Temperaturunterschiede auftreten, die zu Spannungen zwischen dem Trägermaterial Glas und der Metallbeschichtung führen und die Beschichtung abplazt. Das Abplatzen der Metallbeschichtung hängt insbesondere von der Qualität des Glases ab, da Spannungen im Glas durch ein nicht gleichmäßiges Gefüge entstehen können.

Die Ungenauigkeiten und Unschärfen, die bei der Anwendung der bekannten Verfahren erhalten werden, begrenzen auch die Art der darzustellenden Muster und Schriftzüge, da sehr feine und komplizierte Muster nicht mit ausreichender Konturschärfe dargestellt werden können.

Zur Herstellung von farbigen Bildträgern zur Durchleuchtungsprojektion wird in der DE 43 24 108 A1 ein Verfahren beschrieben, worin auf einen Träger aus parallel geschliffenem Glas eine thermisch in Glas einbrennbare Schicht mittels Druckverfahren, beispielsweise Siebdruck, aufgebracht wird. In diesem Verfahren werden die Schichten per Druckverfahren auf das Glas aufgebracht und anschließend eingebrannt. Dieses Verfahren ermöglichst jedoch nicht die Darstellung eines einfachen, farblosen Schriftzuges.

Der vorliegenden Erfindung liegt die Aufgabe zugrunde, ein Verfahren zur Herstellung von mit lichtdurchlässigen Musters versehenen Bildträgern zur Verfügung zu stellen, das die oben dargestellten Nachteile nicht aufweist und Bildträger mit lichtdurchlässigen Mustern liefert, deren Beschichtung thermisch dauerhaft beständig ist, wobei die Muster an ihren Rändern keine Randunschärfen aufweisen sollen. Außerdem sollen die dargestellten Muster ohne Hilfsstege hergestellt werden können. Eine weitere Aufgabe ist es, ein besonders einfaches Verfahren zur Verfügung zu stellen, das daher auch von ungeschultem Personal schnell erlernt und durchgeführt werden kann.

Gegenstand der vorliegenden Erfindung ist ein Verfahren zur Herstellung von mit lichtdurchlässigen Mustern versehenen Bildträgern, das sich dadurch auszeichnet, daß das Muster auf dem Bildträger durch partielles Abtragen eines zuvor auf den Träger in Form einer Schicht aufgebrachten lichtundurchlässigen und/oder lichtdurchlässigen Materials und/oder durch Aufbringen eines lichtundurchlässigen und/oder lichtdurchlässigen Materials mittels eines Laserstrahls erzeugt wird.

Es hat sich herausgestellt, daß durch das erfindungsgemäße Verfahren beliebige Muster, wie z. B. Schriftzüge Firmenlogos, Bilder und andere Darstellungen, auf den beschichteten Glasträger aufgebracht werden können, ohne daß es zu Spannungen zwischen dem Glas und der Beschichtung kommt, so daß das Abplatzen der Beschichtung insbesondere an den Rändern vermieden werden kann. Ferner wurde festgestellt, daß beim Herstellen der Schriftzüge mit einem Laser am Rand der Beschriftung keine Kanten entstehen, die beim Einsatz des hergestellten Bildträgers zu Unschärfen führen können. Ein weiterer Vorteil des erfindungsgemäßen Verfahrens ist es, daß auch sehr feingliedrige Figuren oder Buchstaben ohne Schwierigkeiten von ungeschultem Personal schnell aufgebracht werden können.

Als Bildträger können handelsübliche, transparente Träger aus hitzebeständigen Materialien, vorzugsweise aus parallelgeschliffenem Glas und Glaskeramik sowie damit verwandte und ähnliche Materialien verwendet werden. Die Größe der Bildträger kann beliebig sein und wird in der Regel dem jeweiligen Lichtwerfersystem angepaßt. Üblicherweise sind die Bildträger rund und haben einen Durchmesser von etwa 2 bis 15 cm.

Das lichtundurchlässige bzw. zumindest teilweise lichtdurchlässige Material liegt als dünne Schicht auf dem Träger vor bzw. wird als dünne Schicht aufgebracht. Schicht im Sinne dieser Erfindung bedeutet, daß das lichtundurchlässige bzw. zumindest teilweise lichtdurchlässige Material flächenhaft über den gesamten Träger oder partiell, d.h. in Form von Teilfächen, oder als Muster auf dem Träger aufgebracht ist. Muster bedeuten hier alle denkbaren Negativ- und Positivformen der gewünschten Darstellung.

Zur Bildung der lichtundurchlässigen Schicht sind alle hitzebeständigen, d.h. unter den Temperaturbedingungen der verwendeten Lichtwerfersysteme beständigen, lichtundurchlässigen Materialien geeignet, die auf Glas haften. Üblicherweise werden Metalle oder hitzebeständige Kunststoffe, wie Teflon, eingesetzt. Als besonders geeignet haben sich Metalle, wie z. B. Chrom oder Silber, erwiesen.

Die zumindest teilweise lichtdurchlässigen Materialien können die farbigen Abschnitte des Musters bilden. Zumindest teilweise lichtdurchlässig im Sinne dieser Erfindung bedeutet, daß die Materialien transparente, ggf. farbige Schichten bilden, durch die der Lichtstrahl des Lichtwerfersystems zumindest teilweise durchtreten kann und eine farbiges Muster dargestellt wird. Als zumindest teilweise lichtdurchlässige Materialien können alle hitzebeständigen, d.h. unter den Temperaturbedingungen der verwendeten Lichtwerfersysteme beständigen, zumindest teilweise lichtdurchlässigen Materialien werden. Diese Materialien sollten eine gute Haftung auf dem Träger aufweisen. Vorzugsweise sind diese Materialien farbig. Beispiele für geeignete zumindest teilweise lichtdurchlässige Materialien sind farbige anorganische Verbindungen sowie thermisch härtbare, organische Lacke und Farben.

Als anorganische farbige Materialien eignen sich insbesondere die farbigen Oxide, Sulfide, Silikate, Aluminate und Borate von Metallen, wie Eisen, Kobalt, Nickel, Chrom, Mangan, Titan, Zirkonium, Vanadium, Zink, Blei, Wismut usw. sowie Gemische der voranstehenden. Zu den anorganischen farbigen Materialien zählen auch die keramische Farben, wobei sich die Lüster als besonders geeignet erwiesen haben.

Besonders farbintensive Schichten bzw. Muster können durch sog. dichroidische Schichten erreicht werden. Diese dichroidischen Schichten werden erhalten, indem zwei oder mehrere Metalloxide nacheinander auf den Träger aufgebracht werden.

Zum Erzeugen des Musters wird erfindungsgemäß ein Laser eingesetzt. Es wurde festgestellt, daß es mit Hilfe eines Laser möglich ist, eine bereits auf dem Bildträger aufgebrachte Schicht aus lichtundurchlässigem oder zumindest teilweise lichtdurchlässigem Material mit hoher Genauigkeit in der gewünschten Form, z.B. als Muster oder Schriftzug, zu entfernen oder aufzubringen, ohne daß dabei die Trägerplatte, d.h. das Glas, thermischen Belastungen ausgesetzt wird, die zu Spannungen zwischen der Beschichtung und dem Glas führen können. Das Glas wird nicht angegriffen, es entstehen beim Aufbringen des Musters im Glas keine thermischen Spannungen. Es werden beschichtete, mit Mustern versehene Bildträger erzeugt, bei denen die Beschichtung auf dem Glas stabil ist und nicht abplatzt, auch wenn sie hohen Temperaturen, wie z.B. in einem Lichtwerfersystem, ausgesetzt ist. Überraschenderweise wurde festgestellt, daß auch bei Lichtwerfersystemen, die im Freien installiert werden und bei denen die Bildträger einmal der Außentemperatur und zum anderen der Lichtquelle ausgesetzt sind, über eine sehr lange Zeit eine stabile Beschichtung aufweisen, während bei den bekannten Bildträgern aus Glas, die nach den üblichem Ätzverfahren behandelt wurden, schon bald ein Abplatzen der Beschichtung beobachtet wird.

Als Laser zum Erzeugen des Mustern, wie Schriftzügen, graphischen Darstellungen etc. können übliche Laser zur Materialbearbeitung eingesetzt werden. Die Laser sollten eine ausreichende Energie haben, um die auf die Glasplatte aufgebrachte Schicht entfernen, d.h. verdampfen, zu können. Üblicherweise besitzen die Laser eine Leistung bis zu 120 W (Dauerstrichleistung), bevorzugt von 50 W bis 120 W, wobei die Lampenleistung üblicherweise bis zu 6 kW beträgt. Zum entfernen der Metallschicht können die Glasscheiben in eine Haltevorrichtung eingespannt werden.

Das erfindungsgemäße Verfahren weist mehrere mögliche Ausführungsformen auf.

In einer ersten Ausführungsform wird ein Träger eingesetzt, dessen eine Seite der bereits vollständig oder teilweise flächig mit einem oder mehreren lichtundurchlässigen oder zumindest teilweise lichtdurchlässigen Materialien beschichtet ist. Das flächige Aufbringen der Materialien erfolgt, in Abhängigkeit vom Material, zweckmäßiger Weise durch Aufdampfen oder Aufschmelzen. Metalle werden in der Regel aufgedampft, währen die anorganischen Verbindungen aufgeschmolzen werden. Die organischen Farben und Lacke können in an sich bekannter Weise durch Aufspritzen, Streichen, Tauchen usw. mit nachfolgender Härtung aufgebracht werden. Das Muster wird durch Abtrag der Schicht mittels Laser erhalten. Ist der Träger mit einem lichtundurchlässigen Material beschichtet, so wird ein farbloses Muster auf schwarzem Hintergrund erhalten. Verwendet man ein zumindest teilweise lichtdurchlässiges farbiges Material wird ein farbloses Muster auf einem farbigen Hintergrund erhalten. Auch die Herstellung der Negativformen, d.h. schwarzes bzw. farbiges Muster auf farblosem Hintergrund, ist möglich.

In einer weiteren Ausführungsform wird ein unbeschichteter Träger eingesetzt. Das Muster wird erhalten, indem lichtundurchlässiges oder zumindest teilweise lichtdurchlässiges Material auf den Träger aufgebracht wird. Anschließend führt man den Laser entsprechend dem gewünschten Muster über den Träger, wodurch das aufgebrachte Material auf den Träger aufgeschmolzen wird. Das überschüssige, nicht aufgeschmolzene Material wird in an sich bekannter Weise durch Abspülen, Lösen, Blasen usw. entfernt. Dieser Vorgang kann mehrere Male wiederholt werden. Im zweiten Durchgang kann beispielsweise ein anders farbiges Material eingesetzt werden, daß in Form eines vom ersten Muster unterschiedlichen Muster aufgeschmolzen wird. Diese Ausführungsform ermöglicht es, mehrfarbige Bildträger herzustellen.

Die dritte mögliche Ausführungsform des erfindungsgemäßen Verfahrens stellt eine Kombination der ersten beiden Ausführungsformen dar. Beispielsweise kann von einem bereits beschichteten Träger ein Muster mittels Laser abgetragen werden. Anschließend werden auf die entfernten Flächen farbige Muster in gewünschter Form wie zuvor beschrieben erzeugt. Die Verfahrensschritte können in beliebiger Reihenfolge und beliebig oft wiederholt werden. Diese Ausführungsform ermöglicht beispielsweise die Herstellung von graphischen Bildern.

Durch das erfindungsgemäße Verfahren können Bildträger mit beliebigen Mustern und Farben mit großer Schärfe und hoher Licht- und Temperaturbeständigkeit hergestellt werden.

In einer besonders bevorzugten Ausführungsform der vorliegenden Erfindung wird das auf den Bildträger aufzutragende Muster bzw. der Schriftzug über ein Lesegerät (Scanner) in ein Computerprogramm übertragen. Dieses Computerprogramm, bzw. der Computer, ist an das Lasergerät angeschlossen und steuert die einzelnen Funktionen des Lasers, wie z.B. die Leistung des Lasers, d.h. die Energiedichte, und die Strichführung, d.h. das Muster, welches mit dem Laser gezeichnet werden soll. Auf diese Weise ist es möglich, das wiederzugebende lichtdurchlässige Muster bzw. den Schriftzug in einfacher Weise und mit hoher Genauigkeit auf den Bildträger zu übertragen. Eine derartige Verfahrensführung ermöglicht es, daß auch ungeschultes Personal die Schriftzüge bzw. Muster auf die Bildträger aufbringen kann. Insgesamt ermöglicht diese Verfahrensweise eine kostengünstige und schnelle Herstellung von Bildträgern mit gewünschten Mustern, die beliebig kompliziert sein können. Ein weiterer Vorteil ist, daß das Herstellen dieser lichtdurchlässigen Muster und Schriftzüge keine besonderen Maßnahmen hinsichtlich Staubfreiheit, Temperaturkonstanz usw. erfordert. Da dieses Verfahren im Gegensatz zu den aus dem Stand der Technik bekannten Verfahren keinerlei Chemikalien benötigt, werden Probleme, die bei der Handhabung und Entsorgung der verwendeten Chemikalien auftreten können, vermieden.

## Patentansprüche

1. Verfahren zur Herstellung von mit lichtdurchlässigen Mustern versehenen Bildträgern, **dadurch gekennzeichnet, daß** das Muster auf dem Bildträger durch partielles Abtragen eines zuvor auf den Träger in Form einer Schicht aufgebrachten lichtundurchlässigen und/oder lichtdurchlässigen Materials und/oder durch Aufbringen eines lichtundurchlässigen und/oder lichtdurchlässigen Materials mittels eines Laserstrahls erzeugt wird.

2. Verfahren nach Anspruch 1, **dadurch gekennzeichnet, daß** als Bildträger ein Träger aus parallel geschliffenem Glas eingesetzt wird.

3. Verfahren nach Anspruch 1 oder 2, **dadurch gekennzeichnet, daß** als lichtundurchlässiges Material Metalle, insbesondere Chrom oder Silber, oder hitzebeständige Kunststoffe eingesetzt werden.

4. Verfahren nach einem der Ansprüche 1 bis 3, **dadurch gekennzeichnet, daß** als zumindest teilweise lichtdurchlässiges Materialien farbige anorganische Verbindungen und/oder thermisch härtbare, organische Lacke und Farben eingesetzt werden.

5. Verfahren nach einem der Ansprüche 1 bis 4, **dadurch gekennzeichnet, daß** als anorganische farbige Materialien farbige Oxide, Sulfide, Silikate, Aluminate und Borate von Metallen, wie Eisen, Kobalt, Nickel, Chrom, Mangan, Titan, Zirkonium, Vanadium, Zink, Blei, Wismut usw. sowie Gemische der voranstehenden eingesetzt werden.

6. Verfahren nach einem der Ansprüche 1 bis 5, **dadurch gekennzeichnet, daß** ein bereits vollständig oder teilweise flächig mit einem oder mehreren lichtundurchlässigen oder zumindest teilweise lichtdurchlässigen Materialien beschichteter Träger eingesetzt wird und das Muster durch Abtrag der Schicht erzeugt wird.

7. Verfahren nach einem der Ansprüche 1 bis 5, **dadurch gekennzeichnet, daß** das Muster erhalten wird, indem lichtundurchlässiges oder zumindest teilweise lichtdurchlässiges Material auf den Träger aufgebracht, der Laser entsprechend dem gewünschten Muster über den Träger geführt wird, wodurch das aufgebrachte Material auf den Träger aufgeschmolzen wird, und anschließend überschüssiges, nicht aufgeschmolzenes Material entfernt wird.

8. Verfahren nach Anspruch 7, dadurch gekennzeichnet, daß das Erzeugen eines Musters mit anderen Materialien wiederholt wird.

9. Verfahren nach einem der Ansprüche 1 bis 5, dadurch gekennzeichnet, daß von einem bereits beschichteten Träger ein Muster mittels Laser abgetragen und anschließend farbige Muster in gewünschter Form auf den entfernten Flächen erzeugt werden.

10. Verfahren nach einem der Ansprüche 1 bis 9, **dadurch gekennzeichnet, daß** das Muster mit einem Lesegerät in ein Computerprogramm aufgenommen wird und dieses Programm die Funktionen des Lasers steuert und das Muster auf den Bildträger überträgt.
